(19) Europäisches Patentamt
European Patent Office
Office européen des brevets

(11) **EP 3 090 813 B1**

(12) **EUROPÄISCHE PATENTSCHRIFT**

(45) Veröffentlichungstag und Bekanntmachung des Hinweises auf die Patenterteilung:
**02.08.2023 Patentblatt 2023/31**

(51) Internationale Patentklassifikation (IPC):
**B05D 7/08** *(2006.01)* **B05D 3/06** *(2006.01)*
**B05D 5/06** *(2006.01)* **B05D 7/06** *(2006.01)*
**E04F 15/10** *(2006.01)* **B05D 7/00** *(2006.01)*

(21) Anmeldenummer: **16168755.3**

(22) Anmeldetag: **20.06.2013**

(52) Gemeinsame Patentklassifikation (CPC):
**B05D 7/586; B32B 21/02; B32B 21/08; B32B 27/308;** B05D 5/06; B05D 7/06; E04F 15/102; E04F 15/107

(54) **PANEEL**

PANEL

PANNEAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**09.11.2016 Patentblatt 2016/45**

(62) Dokumentnummer(n) der früheren Anmeldung(en) nach Art. 76 EPÜ:
**13733979.2 / 3 010 648**

(73) Patentinhaber: **Xylo Technologies AG**
**9052 Niederteufen (CH)**

(72) Erfinder: **DÖHRING, Dieter**
**01561 Großenhain (DE)**

(74) Vertreter: **Mader, Joachim**
**Bardehle Pagenberg Partnerschaft mbB**
**Patentanwälte, Rechtsanwälte**
**Prinzregentenplatz 7**
**81675 München (DE)**

(56) Entgegenhaltungen:
**WO-A1-2008/061765 WO-A1-2008/061791**
**WO-A1-2013/149644**

**Beschreibung**

**1. Gebiet der Erfindung**

Die vorliegende Erfindung betrifft ein Paneel, insbesondere ein Wand-, Decken- oder Fußbodenpaneel, mit einer verbesserten Oberflächenbeschichtung.

**2. Hintergrund der Erfindung**

Aus dem Stand der Technik ist eine Vielzahl von Paneelen für Wand-, Decken- oder Fußbodenbeläge bekannt. Beispielsweise sind als Fußbodenbelag im Innenbereich sogenannte Laminatpaneele weit verbreitet. Laminatpaneele sind relativ kostengünstig und lassen sich gut verarbeiten. Sie basieren üblicherweise auf einer Trägerplatte aus MDF-oder HDF-Werkstoff, auf dessen Oberseite ein mit einem Melaminharz imprägniertes Dekorpapier aufgebracht ist. Durch Verpressen unter Einwirkung von Hitze und Druck härten die Harze aus, sodass eine hochabriebfeste Oberfläche entsteht. Zur Erhöhung der Abriebfestigkeit werden der Oberfläche vor dem Verpressen zudem häufig abriebfeste Partikel zugegeben, insbesondere Korund.

Als Alternative zu Laminatpaneelen sind seit einiger Zeit hochwertige Paneele auf PVC-Basis bekannt und werden unter dem Begriff LVT (Luxury Vinyl Tiles) vertrieben. Beispielsweise ist aus der DE 10 2006 058 655 A1 ein Bodenpaneel in der Form eines mehrschichtigen, rechteckigen Laminats mit einer Trägerplatte aus einem weichen Polyvinylchlorid (PVC) bekannt. Auf die weiche PVC-Schicht bzw. Platte wird eine Dekorpapierbahn aufgeklebt, um die sichtbare Oberfläche des PVCs mit einem Dekor zu versehen. Als Alternative zu derartigen Dekorpapierbahnen, die auf eine PVC Trägerplatte aufgebracht werden, ist auch die Verwendung von Kunststofffolien bekannt, die beispielsweise ebenfalls mit einem dekorativen Dekor bedruckt sind.

Aus der DE 10 2006 029 963 A1 ist beispielsweise ein Bodenbelag aus Polyvinylchlorid bekannt, der mit einer strapazierfähigen Lackschicht beschichtet ist, um die Haltbarkeit des PVC Bodenbelags zu verbessern. Die Lackschicht basiert dabei auf einem Acrylharz und wird mittels Strahlung ausgehärtet. Der Kern dieser Druckschrift liegt in der Zugabe von elektrisch leitfähigen Substanzen in das Harz, um den fertigen Bodenbelag mit antistatischen und/oder elektrisch leitenden Eigenschaften zu versehen.

In neuerer Zeit setzen sich am Markt LVT-Paneele durch, die eine härtere PVC-Platte mit einer Stärke von 4-6 mm als Untergrund haben und auf die eine weiche PVC-Schicht mit den Merkmalen wie oben beschrieben aufgebracht ist. In die härtere Platte werden spezielle Profile als Kopplungsmittel gefräst. Auf diese Weise lassen sich die Einzelpaneele leicht zu einer Fläche verlegen.

In einer Weiterentwicklung der oben beschriebenen Laminatpaneele wurden sogenannte direktbedruckte Paneele entwickelt. Bei diesen direktbedruckten Paneelen kommen in der Regel keine Papiere oder Folien mehr zur Anwendung, insbesondere kein Dekorpapier. Die Dekorschicht wird vielmehr unter Verwendung von Dispersionsfarben mittels eines Tiefdruckverfahrens direkt auf die Oberfläche der Trägerplatte gedruckt, welche üblicherweise einer geeigneten Vorbehandlung unterzogen wird. Insbesondere wird vor dem Drucken mittels Walzenapplizierung eine Grundierung aufgetragen. Nach Trocknen der Dekorschicht werden dann mehrere Harzschichten aufgetragen und ausgehärtet. Die Harzschichten dienen dabei als Schutzschicht sowie als abriebfeste Oberfläche. Auch hier werden häufig abriebfeste Partikel, wie etwa Korund, zugegeben, um die Abriebfestigkeit weiter zu erhöhen.

Aus der WO 2007/042258 ist beispielsweise ein Verfahren zur Direktbeschichtung von Holzwerkstoffplatten bekannt, bei dem in einem einzigen Beschichtungsschritt eine dicke Schutzschicht aus Kunststoffmaterial flüssig auf die Oberfläche einer Platte aufgetragen wird. Das verwendete Kunststoffmaterial ist dabei ein flüssiges, polymerisationfähiges Acrylatsystem, das über eine Polymerisation aushärtet.

Die WO 2008/061791 offenbart eine beschichtete Holzwerkstoffplatte, insbesondere ein Wand-, Decken- oder Fussbodenpaneel, wobei die Oberfläche der Vorderseite mit einer Polymerbeschichtung versehen ist, dadurch gekennzeichnet, dass die Polymerbeschichtung einen Härtegradient aufweist, so dass die Härte der Polymerschicht mit zunehmender Tiefe von der Oberfläche der Beschichtung her gesehen im Wesentlichen kontinuierlich abnimmt.

Die genannten Paneele aus dem Stand der Technik haben abhängig von ihrem Aufbau, dem verwendeten Herstellungsverfahren und der verwendeten Materialien jeweils eigene Vor- und Nachteile. Laminatpaneele sind beispielsweise in der Regel einfach zu verlegen, bieten die Möglichkeit qualitativ hochwertige und beliebige Dekore zu realisieren und sind zudem sehr strapazierfähig. Nachteilig sind jedoch typischerweise die akustischen Eigenschaften von Laminatpaneelen, die insbesondere bei Verwendung als Fußbodenbelag lästige Laufgeräusche verursachen. Verantwortlich dafür ist die sehr harte Melaminschicht auf der Laminatoberfläche. Diese Melaminoberfläche wird zudem als kalt und unangenehm empfunden. Beläge auf PVC-Basis haben hervorragende akustische Eigenschaften und zudem eine angenehme Haptik und fühlen sich warm und relativ weich an, was bei vielen Anwendungen, etwa als Fußbodenbelag in einem Badezimmer, wünschenswert ist. Um jedoch optisch qualitativ hochwertige Oberflächen zu erzeugen, müssen derartige PVC-Böden relativ aufwendig verarbeitet werden und sind damit erheblich teurer als übliche Laminatpaneele, jedenfalls wenn sie vergleichbare optische Qualität aufweisen sollen. Von Nachteil ist bei PVC-Paneelen, dass in der weichen Oberfläche bei intensiver Nutzung schnell tiefe Kratzer entstehen, die das optische Bild stören. Von Nachteil ist ferner, dass PVC-Böden aus ökologischer Sicht nicht unbedenklich sind. Sie enthalten gesundheitsschädigende Weichmacher und Chlor ist im Brandfall bekanntermaßen sehr gefährlich (z.B. Chlordioxinbildung).

Direkt bedruckte Paneele räumen einige der Nachteile von Laminatpaneelen aus und benötigen etwa kein mit Melaminharz getränktes Dekorpapier, wodurch die Herstellung vereinfacht werden kann. Jedoch haben sie, was die akustischen Eigenschaften angeht sowohl was die Haptik angeht, ähnliche Nachteile wie Laminatpaneele.

Im Lichte dieser bekannten Paneele bzw. Beläge, stellt sich die vorliegende Erfindung die Aufgabe, ein Verfahren zur Herstellung eines Paneels, insbesondere eines Wand-, Decken- oder Fußbodenpaneels bereitzustellen, das möglichst viele der verschiedenen Vorteile der bekannten Paneele aufweist, dabei jedoch die inhärent vorhandenen Nachteile der verschiedenen Paneele möglichst minimiert. Zudem stellt sich weiter die Aufgabe, dass ein solches Paneel kostengünstig und auf relativ einfache Weise hergestellt werden kann. Eine weitere Aufgabe liegt in der Bereitstellung derartiger Paneele, die eine gute Haltbarkeit haben und mit denen die Realisierung von qualitativ hochwertigen dekorativen Mustern möglich ist.

Diese und andere Aufgaben, die beim Lesen der vorliegenden Beschreibung noch genannt werden oder vom Fachmann erkannt werden können, werden mit einem Paneel nach Anspruch 1 gelöst.

## 3. Ausführliche Beschreibung der Erfindung

Offenbart ist ein Verfahren zur Herstellung eines Paneels, insbesondere eines Wand-, Decken- oder Fußbodenpaneels, bei dem in einem ersten Schritt auf eine Trägerplatte, wie z.B. eine MDF Platte, eine Lage aus flüssigem strahlenhärtbarem Acrylat aufgetragen wird, das nach (vollständiger) Aushärtung eine Martenshärte $M_{S1}$ von 0,5 bis 120 N/mm$^2$ aufweist. In einem darauf folgenden Schritt wird diese Lage zumindest teilweise ausgehärtet. Diese Schritte werden falls nötig so lange wiederholt, bis die gewünschte Schichtdicke erreicht ist, wobei die einzelnen Lagen nass-auf-trocken appliziert werden. Auf die zuletzt ausgehärtete Lage wird dann in einem weiteren Schritt eine Zwischenlage aus flüssigem strahlenhärtbarem Acrylat aufgetragen und darauf - ohne das diese Zwischenlage gehärtet wird - eine weitere Lage aus flüssigem strahlenhärtbarem Acrylat mittels einer Folie aufgetragen. Mit anderen Worten, die weitere Lage bzw. Schicht wird nass-in-nass appliziert. Erfindungsgemäß kommt es hierdurch zu einer teilweisen Vermischung der Lagen, wobei die weitere Lage ein Acrylat ist, das nach Aushärtung eine Martenshärte $M_{S2}$ aufweist, wobei $M_{S2} > M_{S1}$ ist. Die beiden nass-in-nass aufgetragenen Lagen bzw. Schichten werden anschließend gemeinsam vorzugsweise vollständig ausgehärtet. Die einzelnen genannten Schritte müssen dabei nicht notwendig direkt aufeinander folgen, sondern es können noch weitere Zwischenschritte vorgesehen sein. Wichtig ist lediglich, dass die letzten beiden genannten Lagen bzw. Schichten, also die Zwischenlage und die weitere Lage, nass-in-nass aufgebracht werden. Es hat sich gezeigt, dass auf diese Weise besonders widerstandsfähige Schichtsysteme erreicht werden. Zudem verfügt das so resultierende Paneel über weitere technische Vorteile, die im Verlaufe dieser Beschreibung noch erläutert werden.

Vorzugsweise werden die ersten Lagen, die nass-auf-trocken appliziert werden, über Walzenwerke aufgetragen. Lediglich die weitere Lage, welche nass-in-nass auf die Zwischenlage aufgetragen wird, wird erfindungsgemäß über eine Folie, wie etwa über einen Folienkalander appliziert. Die Applizierung von Beschichtungsmitteln über Folien ist dem Fachmann grundsätzlich bekannt. Bei der Verwendung von Folien wird das Beschichtungsmaterial in geeigneter Weise auf die, auch Beschichtungsfolie genannte, Folie übertragen, z.B. über Auftragswalzen. Die so mit Beschichtungsmaterial versehene Folie wird dann auf das zu beschichtende Substrat aufgelegt oder gepresst, wodurch das Beschichtungsmaterial auf das Substrat übertragen wird. Danach kann die Folie wieder entfernt werden, wobei das Beschichtungsmaterial überwiegend oder vollständig auf dem Substrat verbleibt. Vorteilhafter Weise arbeiten die entsprechenden Anlagen im Durchlaufprinzip. Die Grundprinzipien sind beispielsweise in den Anmeldungen WO 2007/059805, WO 2007/059967 oder WO 2008/061765 desselben Anmelders detaillierter beschrieben, deren Inhalt hiermit durch in Bezugnahme vollständig aufgenommen wird.

Gemäß der vorliegenden Erfindung wird zudem ein Paneel, wie etwa ein Wand-, Decken-, aber insbesondere ein Fußbodenpaneel nach Anspruch 1 bereitgestellt, das eine Trägerplatte mit einer Vorderseite und einer Rückseite umfasst, wobei zumindest an der Vorderseite ein Schichtsystem vorgesehen ist, wie es etwa durch das offenbarte Verfahren resultiert. Mit Vorderseite soll hierunter diejenige Seite verstanden werden, die im verlegten Zustand des Paneels, beispielsweise in Form eines Fußbodens, die Nutzseite darstellt die zum Betrachter weist. Die Trägerplatten können optional aufgeteilt werden in Paneele. An ihren Seitenkanten können die Paneele über Kopplungsmittel verfügen, wie insbesondere in Form von Nut- und Federelementen, wie sie aus dem Bereich der Fußbodenlaminatpaneele bekannt sind. Besonders geeignete Nut- und Federelemente erlauben ein Verbinden mehrerer gleichartiger Paneele in Richtungen parallel zur Vorderseite als auch senkrecht zur Vorderseite durch Formschluss. Paneele können natürlich auch einzeln dem Verfahrensablauf unterzogen werden, wenn diese Vorgehensweise auch weniger wirtschaftlich ist. Erfindungsgemäß weist das Schichtsystem von der Vorderseite ausgehend eine erste elastische Schicht auf, die aus einem Polymer besteht und im Folgenden als Schicht S1 bezeichnet wird. Diese erste Polymerschicht weist erfindungsgemäß eine Dicke von 40 - 600 μm auf und hat eine Martenshärte $M_{S1}$ von 0,5 - 120 N/mm², vorzugsweise zwischen 2 und 50 N/mm² und am meisten bevorzugt zwischen 2 und 40 N/mm², sie ist mithin weich elastisch. Über dieser ersten elastischen Schicht wird eine zweite Schicht S2 vorgesehen, die eine Dicke von nur 10 - 180 μm hat und eine Martenshärte $M_{S2}$, die größer ist als die Martenshärte der ersten elastischen Schicht, d. h. $M_{S2} > M_{S1}$. Die Martenshärte $M_{S2}$, bestimmt an der Paneeloberfläche, liegt bevorzugt zwischen 5 - 300 N/mm², bevorzugt bei 5 - 80 N/mm² und noch mehr bevorzugt zwischen 10 und 60 N/mm². Zwischen diesen beiden Schichten S1 und S2 existiert ein Zwischenbereich (Übergangsbereich), mit einer Martenshärte $M_{ZB}$, wobei $M_{S2} > M_{ZB} \geq M_{S1}$ ist. Dieser Zwischenbereich wird vorzugsweise durch die Verwendung des offenbarten Verfahrens erzeugt und entsteht bei Verwendung des Verfahrens automatisch, nämlich durch die teilweise Vermischung der nass-in-nass aufgetragenen Zwischenlage an der Grenzfläche mit der weiteren Lage. Der durch die teilweise Vermischung der Zwischenlage mit der weiteren Lage entstandene Zwischenbereich hat somit keine homogene Härte, sondern einen Härteverlauf zur Schicht S2 hin. Mit anderen Worten, die Martenshärte $M_{ZB}$ des Zwischenbereichs ist nicht konstant sondern nimmt im Verlauf von der Schicht S1 zur Schicht S2 hin zu. Der Zwischenbereich verbessert zum einen die mechanische Beständigkeit des Schichtsystems und verbessert zum anderen die akustischen Eigenschaften der Paneele. Erfindungsgemäße Schichtsysteme haben eine deutlich verbesserte akustische Dämpfungswirkung von zumindest 5 dB, je nach Dicke und Weichheit der ersten Schicht S1 sogar mehr als 9 dB verglichen mit einem entsprechenden Laminatboden mit einer Melaminharzbeschichtung und einer Plattenstärke von 8 mm.

Der erfindungsgemäße Aufbau des Schichtsystems des Paneels hat zur Folge, dass sich die Oberfläche des derart beschichteten Paneels - unabhängig vom Material der Trägerplatte - zudem relativ weich anfühlt und einen für das menschliche Empfinden angenehm warmen haptischen Eindruck hat. Insbesondere hat das Vorsehen der dicken elastischen Schicht S1 erhebliche akustische Vorteile. Im Vergleich zu einem Laminat-Referenzboden führt das erfindungsgemäße Schichtsystems zu einer signifikanten Geräuschdämpfungswirkung beim Begehen. So wird nach IHD-W 431 für einen Laminat-Referenzboden eine Lautheit von 26 Sone ermittelt. Der mit einer elastischen Schicht S1, einer Schicht S2 und dem dazwischen befindlichen Zwischenbereich versehene Boden weist ein Verbesserungsmaß von 15 - 70 % zu diesem Referenzboden auf. Ein PVC (LVT)-Boden wurde im Vergleich zur Referenz mit einem Verbesserungsmaß von 40 % gemessen.

Das beschriebene nass-in-nass Verfahren hat gegenüber dem üblichen schichtweisen Aufbringen und Angelieren (d.h. teilweises Aushärten) der einzelnen UV-härtenden Acrylatlagen eine Reihe gravierender Vorteile: Mit der Folie können dekorübliche Strukturelemente wie z.B. eine synchrone Eichenstruktur in die nasse Schicht eingebracht und ausgehärtet werden. Dabei lassen sich über das Foliendesign beliebige Glanzgrade einstellen. Durch die hohen flüssigen Auftragsmengen der nass-in-nass- Schichten lassen sich auch sehr tiefe Strukturen von beispielsweise 150 μm ausbilden. Mit dem klassischen nacheinander folgenden Auftragen und Angelieren der einzelnen Schichten sind nur sehr bedingt und auch nur sehr flache Strukturen umsetzbar. Das Steuern von unterschiedlichen Glanzgraden ist bekanntermaßen recht aufwendig.

Bei einem Fußboden mit beschriebenem Aufbau muss die oberste Schicht S2 eine sehr hohe Verschleißfestigkeit aufweisen, andernfalls hat der Boden nur mäßige Gebrauchseigenschaften. Den Vorteil der Strukturierung könnte man theoretisch auch erreichen, wenn man eine dicke nasse Schicht S2 auf eine trockene Schicht S1 mittels Strukturfolie appliziert. Dem Fachmann ist jedoch klar, dass damit das Spektrum an verwendbaren Acrylatkomponenten eingeschränkt wird. Wird die Härte der Schicht S2 zu hoch gewählt, geht der gewünschte dämpfende Effekt verloren und es kann vorkommen, dass nach einiger Zeit Schrumpfrisse durch Lackspannungen in der Oberfläche auftreten. Ist die Härte der Schicht S2 niedriger, leidet die Verschleißfestigkeit der Oberfläche bei Gebrauch. Mit dem beschriebenen nass-in nass-Auftrag werden diese Nachteile verringert bzw. beseitigt. Prinzipiell ist die Schicht S1 nach Aushärtung weichelastisch. Mit S2 wird die gewünschte Verschleißfestigkeit (z.B. Kratz- und Mikrokratzfestigkeit, Abrieb) erreicht. Über den Zwischenbereich, der einen entsprechenden Härtegradienten aufweist, werden Materialspannungen und damit verbundene Rissneigung vermieden.

Als Materialien für die Trägerplatte kommen eine Vielzahl von unterschiedlichen Werkstoffen in Frage, da die relevanten physikalischen Eigenschaften des erfindungsgemäßen Paneels im Wesentlichen durch das aufgebrachte Schichtsystem bestimmt werden.

Generell bevorzugt ist die Trägerplatte des erfindungsgemäßen Paneels daher beispielsweise eine MDF-Platte, HDF-Platte, PVC-Platte, Zementfaser-Platte, WPC-Platte (wood powder composite), eine thermoplastische Recyclingplatte, eine Holzplatte, eine Holzfurnier-Platte oder etwa eine Parkettplatte, wie etwa eine Fertigparkettplatte. Wie eingangs erwähnt, kann die Trägerplatte vorteilhaft an ihren Seiten über Kopplungsmittel in Form von Nut- und Federelementen verfügen, sodass die erfindungsgemäßen Paneele einfach beispielsweise auf einem Fußboden zu einem Belag verlegt werden können.

Generell bevorzugt sind die Materialien für die Schichten S1 und S2 sowie die Zwischenlage (sowie S3, falls vorhanden) Acylatsysteme bzw. basieren auf Acrylaten. Unter einem Acrylatsystem wird hierin ein polymerisationsfähiges Gemisch von doppelbindungshaltigen mono-, di- und mehrfachfunktionellen acrylsäurebasierenden Verbindungen verstanden. Typische Vertreter sind beispielsweise Dipropylenglycoldiacrylat, 1,6-Hexandioldiacrylat, Polyurethan-Acrylsäureester, Polyester-Acrylsäurester wie sie im Produktionsprogramm der Firma BASF unter dem Handelsnamen LaromerTM - Typen am Markt erhältlich sind.

Schicht S1 ist vorzugseise ein Polymer auf Basis eines radikalisch polymerisierbaren Oligomers und/ oder Oligomergemisches. Bevorzugt basiert es auf strahlenhärtbaren Acrylatoligomeren. Die Oligomere werden so ausgewählt, dass die Schicht möglichst dämpfende Eigenschaften hat, gekennzeichnet durch eine Martenshärte von 0,5 - 120 N/mm$^2$, besonders bevorzugt 2 - 50 N/mm$^2$. Eine solche Oligomerformulierung besteht beispielsweise aus einem oder mehreren ungesättigten Acrylaten, die eine Polyester-, Polyether und/ oder Polyurethanstruktur enthalten, mit einer Funktionalität von 1 - 4, bevorzugt < 2. Handelsübliche Beispiele dafür sind das Laromer PO 43 F, das Laromer UA 9033 oder das Laromer UA 19 T der BASF. Die Oligomermischung kann weiterhin niedrigviskose Acrylester mit einer Funktionalität von 1 - 4, bevorzugt mit einer Funktionalität von 1 - 2 enthalten. Handelsübliche Beispiele dafür sind das Laromer LR 8887, Laromer DPGDA, Laromer TPGDA der BASF. Für die Härtung mittels UV-Strahlung werden Fotoinitiatoren wie z.B. Mono- oder Bisacylphosphinoxide, Alphahydroxyketone, Benzophenonderivate, Benzildimethyketal oder Phenylglyoxalate benötigt. Die Formulierung kann ferner Additive wie Netzmittel, Entschäumer, anorganische oder organische Füllstoffe enthalten. Als Additive können beispielsweise Polyacrylate, Silikone, Talkum, Bariumsulfat, Kreide, Kieselsäure oder auch Polyharnstoffderivate verwendet werden.

Das Material für die zweite Schicht S2 ist vorzugsweise basierend auf einem radikalisch polymerisierbaren Acrylatoligomer oder einer radikalisch polymerisierbaren Acrylatmischung, bestehend aus einem oder mehreren ungesättigten Acrylaten, eine Polyester, Polyether- und/ oder Polyurethanstruktur enthaltend, mit einer Funktionalität von 1 - 8, bevorzugt 3 - 6. Beispiele dafür sind das Laromer PE 9074, Laromer 8863 oder Laromer LR 8987 als Lackrohstoffe der BASF. Bevorzugt enthalten diese Acrylatmischungen weiterhin niedrigviskose Acrylester mit einer Funktionalität von 1 - 6, bevorzugt mit einer Funktionalität von 2 - 4. Beispielsweise können folgende Rohstoffe der BASF mit den Handelsbezeichnungen Laromer HDDA, Laromer TMPTA, Laromer PPTTA eingesetzt werden. Im Falle UV-vernetzender Systeme werden Fotoinitiatoren wie z.B. Mono- bzw. Bisacylphosphinoxide, Alphahydroxyketone, Benzophenonderivate, Benzildimethylketal oder Phenylglyoxylate zugesetzt. Weiterhin können Additive wie Netzmittel, Entschäumer, Mattierungsmittel sowie anorganische oder organische Füllstoffe zugesetzt werden, beispielsweise Polyacrylate, Silikone, Talkum, Bariumsulfat, Kreide, Kieselsäure oder auch Polyharnstoffderivate. Die Oligomeren werden so ausgewählt, dass die Oberflächenhärte im gewünschten Bereich liegt. Weiterhin wird die Rohstoffauswahl so getroffen, dass die Schicht S2 neben dämpfenden Eigenschaften vor allem eine hohe Verschleißfestigkeit bringt (Kratzfestigkeit, Mikrokratzfestigkeit, Abriebfestigkeit).

Das Material für die Zwischenlage basiert vorzugsweise auf denselben Grundmaterialien wie die beiden Schichten S1 und S2. Am meisten bevorzugt ist es, als Zwischenlage dasselbe oder zumindest ein ähnliches Material wie für die Schicht S1 zu verwenden, es muss sich aber in jedem Fall von dem Ausgangsmaterial für die Schicht S2 unterscheiden. Im fertig ausgehärteten Produkt entsteht automatisch aufgrund des nass-in-nass Auftrags auf die Zwischenlage ein Zwischenbereich durch das Durchdringen der Komponenten der Materialien im Grenzbereich der aufeinandertreffenden nassen Lagen. D.h. bildlich gesprochen: dient als Zwischenlage der letzte Auftrag von S1 , dann hat der resultierende Zwischenbereich nach dem Härten am Grund (also nahe der Trägerplatte) die Struktur des Oligomers von Schicht S1; nach oben findet in Richtung Grenzfläche eine zunehmende Durchmischung der Strukturen der Oligomere von S1 und S2 statt. Oberhalb der Grenzfläche nimmt die Durchmischung wieder ab und an der Oberfläche befindet sich die Struktur bestimmt durch das Oligomer der Schicht S2. Die Eigenschaften dieses Zwischenbereichs sind abhängig von der chemischen Zusammensetzung von S1 und S2 sowie von den Verfahrensparametern beim Zusammenfügen der beiden Schichten im Foliekalander, welche die Durchmischung beeinflussen.

Die Dicke der Trägerplatte liegt vorzugweise zwischen 3 und 20 mm, mehr bevorzugt zwischen 4 und 15 mm, noch mehr bevorzugt zwischen 3 und 12 mm und am meisten bevorzugt zwischen 4 und 10 mm. Abhängig von Verwendungszweck und aufgebrachtem Dekor (falls vorhanden) sind unterschiedliche Formen möglich. Soll das Paneel beispielsweise ein Echtholzdekor imitieren und als Fußboden- oder Wandpaneel verlegt werden, ist eine rechteckige Grundform der Trägerplatte bzw. des Paneels vorteilhaft, beispielsweise in einer Rechteckform von 1 ½ - 2 m Länge und 10 - 30 cm Breite.

Wie eingangs erwähnt bestimmen sich die relevanten physikalischen Eigenschaften der Oberfläche des erfindungsgemäßen Paneels im Wesentlichen durch das erfindungsgemäße Schichtsystem. Die dicke erste elastische Schicht S1 ist für die akustischen Eigenschaften des Paneels maßgebend. Grundsätzlich besonders bevorzugte Härtewerte nach Martens für die Schicht S1 liegen dabei wie oben erwähnt bei 0,5 - 120 N/mm$^2$, vorzugsweise zwischen 2 und 50 N/mm$^2$ und am meisten bevorzugt zwischen 2 und 40 N/mm$^2$. Die zweite Schicht S2 muss in jedem Fall eine größere Härte aufweisend als die erste Schicht und kann bevorzugt in einem Bereich von 5 - 300 N/mm$^2$ liegen, mehr bevorzugt bei 5 - 80 N/mm$^2$ und noch mehr bevorzugt zwischen 10 und 60 N/mm$^2$. Das Material für die Zwischenlage sollte hingegen bevorzugt aus einem Material gewählt sein, dass (nach Aushärtung) eine geringere Härte als die Schicht S2 hat, also eine Martenshärte Mz für die gilt: $M_{S2} > M_Z \geq M_{S1}$. Hiervon zu unterscheiden ist die Martenshärte $M_{ZB}$ des resultierenden Zwischenbereichs, die ja durch das teilweise Vermischen der Materialien der Zwischenlage und der Schicht bzw. Lage S2 entsteht und daher irgendwo zwischen der Härte der Schicht S2 und der Härte der Zwischenlage liegen wird. Durch das teilweise Vermischen der Zwischenlage mit der weiteren Lage, die die Schicht S2 bildet, kommt es zu besonders guten Hafteigenschaften des Schichtsystems. Dem Fachmann ist klar, dass auch wenn sich die genannten Bereichsangaben für die bevorzugten Härten von $M_{S1}$ und $M_{S2}$ teilweise überschneiden es im Wesentlichen darauf ankommt, dass $M_{S2}$ größer ist als $M_{S1}$.

Die Bestimmung der Martenshärte ist dem Fachmann grundsätzlich bekannt. Bei der Entwicklung der vorliegenden Erfindung wurde hierzu mit einem Taber Abraser Prüfgerät 5151 der Firma Taber Industries gearbeitet. Jeweils nach 200 Umdrehungen mit S-41-Schleifpapier wurden die Härte und Spurentiefe der Proben bestimmt. Die Bestimmung der Martenshärte (registrierende Härteprüfung unter Prüfkrafteinwirkung) wurde gemäß DIN EN ISO 14577 durchgeführt. Als Prüfgerät wurde ein "Fischerscope H100" der Helmut Fischer GmbH eingesetzt. Folgende Prüfparameter wurden verwendet: Maximalkraft: 50/30 mN sowie Messdauer: 20 Sekunden. Die Bestimmung der Spurtiefe wurde mit einem mechanischen Tastschnittmessgerät durchgeführt. Als Prüfgerät wurde ein Perthometer S3P der Firma Perthen verwendet.

Bei der Vermessung der Proben hat sich gezeigt, dass es wahrscheinlich aufgrund der verwendeten relativ weichen Materialien zu mehr oder weniger großen Abweichungen in der Härte einer gegebenen Schichttiefe kommt. Es ist daher notwendig an mehreren Punkten zu messen, um über eine Mittelwertbildung aussagekräftige, repräsentative Daten zu erhalten. Bei den vorgenommenen Messungen wurden die Härte sowie die Spurentiefe nach 200 Umdrehungen des Schleifpapiers jeweils an vier Stellen gemessen. Es hat sich gezeigt, dass vier Messpunkte in den meisten Fällen eine ausreichende Genauigkeit bieten. Selbstverständlich erhält man noch genauere Messergebnisse, wenn man mehr als vier Messpunkte verwendet, wie beispielsweise acht.

Erfindungsgemäß liegt die Dicke der elastischen Schicht S1 in einem Bereich von 40 - 600 $\mu$m, mehr bevorzugt von 80 - 450 $\mu$m und am meisten bevorzugt von 120 - 240 $\mu$m. Die zweite Schicht S2 hat unabhängig davon eine Dicke von 10 - 180 $\mu$m, bevorzugt von 20 - 100 $\mu$m und am meisten bevorzugt von 30 - 80 $\mu$m. Dabei ist es dem Fachmann klar, dass je dicker die erste elastische Schicht S1 gewählt wird, umso elastischer die Eigenschaften der Oberfläche des so beschichteten Paneels sein können. Die Schicht S1 wird bevorzugt nacheinander in Teilschritten über mehrere Walzenwerke mit jeweiligem Angelieren nach den Walzenauftragswerken aufgetragen werden. Unter Angelieren wird verstanden, dass in der jeweiligen Schicht eine radikalische Polymerisation durch Strahlung beispielsweise mittels UV initiiert wird, diese Polymerisation jedoch schnell zum Abbruch gebracht wird, um so die Haftung der nächsten Schichten sicher zu stellen. Die Schicht S1 kann aber auch in einem Schritt aufgetragen werden, insbesondere wenn eine dünne Variante der Schicht S1 gewünscht ist. Vorzugsweise ist zwischen der Vorderseite und der Schicht S1 weiter eine Dekorschicht vorgesehen, die eine Druckfarbe (Tinte) umfasst, bzw. aus dieser Druckfarbe besteht. Der Begriff "Druckfarbe" wird hierin generisch verwendet und soll keine einzelne Farbe sondern Druckfarbe im Allgemeinen bezeichnen: beim digitalen Vierfarbdruck besteht die Druckfarbe z.B. aus vier verschiedenen Farben (Cyan, Magenta, Gelb, Schwarz), aus denen das Druckbild durch Farbmischung der aufgespritzten Farbtröpfchen erzeugt wird. Beim indirekten Tiefdruck wird das Dekorbild bekanntermaßen über rotierende Druckzylinder erzeugt. Mit den Druckzylindern werden dekorspezifische Mischfarben aufgetragen. Grundsätzlich ist es bei der vorliegenden Erfindung bevorzugt, dass die Schichten im Wesentlichen transparent sind, um als Schutz für eine darunterliegende Dekorschicht dienen zu können.

Üblicherweise kommen im Stand der Technik als Druckfarbe Dispersionsfarben zum Einsatz, wie insbesondere Acrylfarben. Diese Dispersionsfarben werden regelmäßig bei dem üblicherweise zum Einsatz kommenden Tiefdruckverfahren verwendet. Dispersionsfarben sind Druckfarben, die in der Regel aus drei Hauptbestandteilen bestehen, nämlich a) einem Lösungsmittel (üblicherweise Wasser), b) Bindemittel in Form von Kunststoffpolymeren, die sich bei Verdunstung des Lösungsmittels zusammenlagern und einen feste Schicht bilden, sowie c) Farbpigmente zur Erzeugung der gewünschten Deckung und des gewünschten Farbtons. Die Härtung dieser Dispersionsfarben erfolgt also nicht durch eine Polymerisation, sondern durch ein Verflüchtigen des Lösungsmittels, da die Bindemittel bereits als Polymere vorliegen. Die in der Dispersion enthaltenen Polymere verbinden sich bei Verdunstung des Bindemittels auf rein physikalische Weise und bilden eine feste, geschlossene Schicht.

Es wurde im Zusammenhang mit der vorliegenden Erfindung überraschend festgestellt, dass verbesserte Hafteigenschaften von erfindungsgemäßen Schichtsystemen erreicht werden können, wenn im vorliegenden Fall anstelle der üblichen Dispersionsfarben polymerisierbare Druckfarben verwendet werden. Der positive Effekt ist besonders ausgeprägt, wenn die Druckfarbe der Dekorschicht und zumindest ein Teil der ersten elastischen Schicht S1 gemeinsam ausgehärtet bzw. polymerisiert werden (wenn die Dekorschicht direkt aufgedruckt wird, wie etwa im Digitaldruck, besteht die Dekorschicht quasi aus der Druckfarbe). Unter Aushärtung einer Polymerschicht bzw. einer polymerisierbaren Druckfarbe wird hierbei die chemische Reaktion verstanden, die bei der Polymerisation stattfindet. Hiervon zu unterscheiden ist das Trocknen derartiger Schichten, bei dem lediglich das Lösungsmittel, wie etwa der Wassergehalt einer Dispersionsfarbe, verdunstet bzw. auf rein physikalische Weise reduziert wird. Durch die gemeinsame Aushärtung der polymerisierbaren Druckfarbe und der Materialien für die erste elastische Schicht erfolgt vermutlich eine chemische Vernetzung an der Grenzfläche der beiden Schichten, von der angenommen wird, dass sie für die verbesserte Haftung der Schichten insgesamt verantwortlich ist. Die herkömmlich verwendeten Dispersionsfarben weisen keine polymerisierbaren Acrylatsysteme auf, sodass keine derartige chemische Vernetzung zwischen Druckfarbe, also der Dekorschicht, und der elastischen Schicht stattfinden kann.

Allgemein bevorzugt sind die für die vorliegende Erfindung verwendeten Druckfarben daher polymerisierbare Druckfarben und insbesondere polymerisierbare Acrylatsysteme. Polymerisierbare Druckfarben erhalten als Hauptbestandteile Bindemittel, nämliche reaktive Doppelbindungen enthaltene Harze; Monomere bzw. Oligomere, wie etwa Acrylatmonomere und Acrylatoligomere; optional Fotoinitiatoren für strahlenhärtbare Druckfarben; Additive wie etwa Entschäumer, Verlaufsadditive, etc.; und Farbpigmente sowie Füllstoffe zur Erzielung bestimmter physikalisch technischer Eigenschaften. Generell bevorzugt sind die verwendeten Druckfarben für die vorliegende Erfindung weiter strahlenhärtbar, wie insbesondere durch UV-Strahlen härtbare Druckfarben. Besonders bevorzugt ist die Druckfarbe basierend auf einem polymerisierbaren Acrylat und/oder N-Vinylcaprolactam.

In einer weiteren Ausführungsform der vorliegenden Erfindung ist auf der Vorderseite unterhalb der Dekorschicht eine dritte elastische Schicht S3 vorgesehen, die eine Martenshärte $M_{S3}$ hat, wobei die Härte der dritten elastischen Schicht vorzugsweise gleich oder kleiner der Härte der ersten elastischen Schicht S1 ist, d.h. $M_{S3} \leq M_{S1}$. Auf diese Weise können besonders dicke Schichtsysteme mit entsprechend guten elastischen Eigenschaften erzeugt werden. Vorzugsweise sollte die Schicht S3 dabei eine Dicke von 10 - 300 $\mu$m haben, mehr bevorzugt von 30 - 150 $\mu$m und am meisten bevorzugt von 60 - 120 $\mu$m. Für die Schicht S3 wird ein radikalisch polymerisierbares Acrylatgemisch verwendet wie für die Schicht S1 beschrieben. Diese Oligomermischung wird vor der Applikation jedoch mit Pigmenten versetzt um der Schicht eine deckende Farbe als Druckgrund zu geben, d.h. diese Schicht S3 sollte nicht transparent sein um eine genügende Druckqualität zu erreichen. Die Dekorschicht, inkl. evtl. notwendiger Primer- und Grundierungsschichten, wird dann auf diese zuvor aufgebrachte Schicht S3 aufgebracht. Der Vorteil dieser dritten Schicht S3 liegt darin, dass das Gesamtschichtsystem sehr dick gestaltet werden kann, ohne dass der optische Eindruck einer eventuell vorhandenen Dekorschicht beeinträchtigt wird, da zwischen einem Betrachter und der Dekorschicht nur die erste elastische Schicht S1 und die zweite Schicht S2 mit dem Zwischenbereich vorliegt.

Das erfindungsgemäße Schichtsystem hat weiter den Vorteil, dass keine weiteren Papier- oder Kunststofffolien an der Vorderseite des Paneels bzw. der Trägerplatte notwendig sind, wie es im Stand der Technik bei vielen Anwendungen notwendig war. Die Paneele können somit im Durchlauf in einer Anlage beschichtet werden und müssen nicht mit einer zuvor produzierten Papier- oder Kunststofffolie in Kontakt gebracht und verklebt werden.

**Beispiel 1:**

In einem ersten Schritt wird eine HDF-Trägerplatte mit einer Stärke von 8 mm über ein Walzenauftragswerk mit einem Primer auf Basis einer handelsüblichen wässrigen Acrylatdispersion mit einem Auftrag von 10 g/m$^2$ versehen. In einem nächsten Schritt erfolgt das Glätten der Platte über ein Walzenauftragswerk mittels einer Spachtelmasse basierend auf einer hochgefüllten wässrigen Acrylatdispersion mit einer Auftragsmenge von 25 g/m$^2$. Anschließend wird ein Druckgrund (Grundierung) auf Basis einer mit Füllstoffen und Farbpigmenten versetzten wässrigen Acrylatdispersion mittels Gießverfahren (d.h. einem Vorhangbeschichtungsverfahren) in einer Menge von 70 g/m$^2$ appliziert. Nach jedem dieser Beschichtungsschritte erfolgt ein Zwischentrocknen bei Temperaturen zwischen 80 und 200 °C. Die so behandelten Platten werden einer Druckmaschine im Wesentlichen bestehend aus einer Gravurwalze und einer Gummiwalze für die Übertragung des Druckbildes vom Gravurzylinder auf die Platte zugeführt. Das Druckbild wird über drei nachgeschaltete Druckwerke erzeugt, wobei durch jedes Druckwerk eine eigene Dispersions-Druckfarbe bestehend aus Farbpigmenten und einer wässrigen Acrylatdispersion aufgetragen wird. Bei einer Imitation eines dunklen Nußbaumholzes werden beispielsweise 5 g/m$^2$ Druckfarbe appliziert. Auf die Druckfarbenschicht wird im weiteren Prozess ein handelsüblicher UV-Primer über ein Walzenauftragswerk aufgetragen. Über ein nachfolgendes Walzenauftragswerk wird nun eine Lage eines radikalisch polymerisationsfähigen Acrylatoligomergemisches (1) in einer Menge von 80 g/m$^2$ aufgetragen. Diese Oligomermischung (1) enthält 70 Teile Laromer PE 9032 und 25 Teile Laromer TBCH der BASF sowie 5 Teile an weiteren Zusätzen (Benzildimethylketal als Fotoinitiator, ein aliphatisches Urethanacrylat mit einer Funktionalität von 3). Mittels UV-Strahler erfolgt ein Angelieren dieser Schicht. Über ein weiteres Walzenauftragswerk wird auf diese teilweise gehärtete Schicht erneut dieselbe Oligomermischung (1) in einer Menge von 80 g/m$^2$ aufgetragen. Diese Zwischenlage wird nass einem Folienkalander zugeführt, d.h. ohne ein Angelieren. Es wird dann nass-in-nass über eine Strukturträgerfolie eine weitere Lage aus einem weiteren doppelbindungshaltigen, mit Photoinitiatoren versehenen strahlenhärtbaren Oligomers in einer Menge von 50 g/m$^2$ gelegt und mittels einer UV-Strahlung gemeinsam mit der zuvor aufgetragenen Zwischenlage polymerisiert. Die Strukturfolie ist zu diesem Zweck für UV durchlässig, so dass durch die aufgelegte Folie hindurch bestrahlt werden kann. Das Oligomer (2) besteht aus einer Mischung aus 75 Teilen Laromer PE 9074, 20 Teilen Laromer HDDA der BASF und 5 % weiteren Zusätzen (u.a. Phenylglyoxalat als Fotoinitiator). Nach der UV-Aushärtung wird die Folie entfernt und man erhält die fertige beschichtete Dekorplatte, die in einem weiteren Prozess in Paneele zerteilt werden kann, wobei an diese Paneele bekannte Kopplungselemente angefügt werden. Durch das teilweise Vermischen der Zwischenlage mit der weiteren Lage entsteht im fertigen Produkt an der Grenzfläche der beiden Lagen ein Zwischenbereich, der keine homogene Härte hat.

**Beispiel 2:** Paneele, bei denen das Druckbild mit strahlenhärtenden Druckfarben erzeugt wird

Es wird wieder eine 8 mm starke HDF-Trägerplatte verwendet und wie in Beispiel 1 beschrieben mit wässrigem Primer, Spachtel und Druckgrund versehen. Auf der so behandelten Platte wird mittels Digitaldrucker das gleiche Dekorbild wie in Beispiel 1 erzeugt. Hierbei werden jedoch keine Dispersionsfarben verwendet, sondern UV-strahlenhärtende Digitaldruckfarben. Für die Erzeugung des Druckbildes wird eine Farbmenge von etwa 2 $g/m^2$ benötigt. Die Farbe wird zunächst mit 150 $mJ/cm^2$ (Quecksilber) fixiert. Darauf erfolgt der Auftrag von 2 $g/m^2$ eines handelsüblichen UV-Primers. Auf diese nicht bestrahlte Schicht wird ein doppelbindungshaltiges, mit Photoinitiatoren versetztes Oligomer (1) wie in Beispiel 1 aufgetragen und diese Lage gemeinsam mit der Druckfarbe ausgehärtet, d.h. durch UV-Bestrahlung polymerisiert. Danach werden die weiteren Lagen wie in Beispiel 1 aufgetragen. Die daraus resultierende Polymerschicht umfasst die Druckfarbe und alle darüber liegenden Schichten. Auch auf dieser Basis hergestellte Paneele werden einem Labortest unterzogen

**Beispiel 3:**

Eine HDF-Trägerplatte wird den Fertigungsstufen bis nach der Druckmaschine wie in Beispiel 1 unterzogen. Auf die abgetrocknete Druckfarbe wird ein handelsüblicher wässriger UV-Primer aufgelegt. Die Platte ist durch den vorgelagerten Prozess mit einer Oberflächentemperatur von 50 - 60 °C so aufgewärmt, dass das Wasser des Primers auf der Oberfläche schnell verdunstet und der Primer so fixiert ist. Anschließend wir ein Oligomergemisch (1) wie in Beispiel 1 beschrieben in einer Menge von 50 $g/m^2$ mittels Walzenwerk appliziert und mittels UV-Strahlung angeliert. Danach erfolgt ein zweiter Walzenauftrag von 50 $g/m^2$ dieses Oligomergemisches (1) mit nachfolgendem Angelieren und schließlich ein dritter Auftrag (1) von 50 $g/m^2$ mit nachfolgendem Angelieren. Über ein weiteres Walzenauftragswerk wird auf diese teilweise gehärtete Schicht, welche der Schicht S1 entspricht, erneut dieselbe Oligomermischung (1) in einer Menge von 80 $g/m^2$ aufgetragen und darüber nass-in-nass die weitere Lage mittels eines Folienkalanders in einer Menge von 30 $g/m^2$ appliziert und mittels UV-Strahlung gehärtet. Die Weiterverarbeitung der Platten zu Fußbodenpaneelen erfolgt wie in Beispiel 1.

**Beispiel 4:**

In einem ersten Schritt wird eine HDF-Trägerplatte mit einer Stärke von 8 mm über ein Walzenauftragswerk mit einem Primer auf Basis einer handelsüblichen wässrigen Acrylatdispersion mit einem Auftrag von 10 $g/m^2$ versehen. In einem nächsten Schritt erfolgt das Glätten der Platte über ein Walzenauftragswerk mittels einer Spachtelmasse basierend auf einer hochgefüllten wässrigen Acrylatdispersion mit einer Auftragsmenge von 25 $g/m^2$. Anschließend wird mittels eines Walzwerkes eine UV-strahlenhärtende Masse in einer Menge von 40 $g/m^2$ appliziert. Diese strahlenhärtende Masse besteht zu 65 Gewichtsteilen aus der Oligomermischung (1) aus Beispiel 1 und 35 Teilen feinst dispergiertem Titandioxid. Anschließend wird mittels UV-Strahlung angeliert. Es erfolgt über ein nachgelagertes Walzenauftragswerk ein zweiter Auftrag von 40 $g/m^2$ dieser Masse mit nachfolgendem Angelieren. Die so applizierte Schicht entspricht der Schicht S1. Danach erfolgt das digitale Bedrucken wie in Beispiel 2. Im Weiteren wird ein handelsüblicher UV-Primer in einer Menge von 3 $g/m^2$ über ein Walzenauftragswerk aufgetragen. Die weitere Beschichtung erfolgt wie in Beispiel 1 beschrieben, ebenso die Herstellung der Paneele aus den Ausgangsplatten.

**Beispiel 5:**

Es werden die Prozessstufen aus Beispiel 4 bis einschließlich Digitaldruck und anschließender UV-Primerbeschichtung ausgeführt. Die Applikation der weiteren Lagen erfolgt wie in Beispiel 3 beschrieben. Auch die so erhaltenen Ausgangsplatten werden zu Paneelen verarbeitet.

Nachfolgend werden für die in den Beispielen 1 - 5 hergestellten Fußbodenmaterialien einige ermittelte Eigenschaften dargestellt:

**Bestimmung der Gehschallemission nach IHD-W 431** (Fassung v. 14.05.2012):

Die Kennwerte wurden unter Nichtbeachtung der Spektren mit der größten und kleinsten Lautheit (Ausreißerkorrektur gemäß IHD-W 431) ermittelt.

Das Ergebnis wird als Differenz des A-bewerteten Gesamtschalldruckpegels und der Lautheit der untersuchten Variante gegenüber dem Referenzfußboden ausgewiesen. Die Veränderung der linearen Kenngröße Lautheit (N) wird in Bezug auf die Referenz prozentual wie folgt ermittelt:

Prozentuale Änderung:

$$((N_{ref} - N_f) * 100\,\%)/N_{ref}$$

Der ermittelte Kennwert gibt die prozentuale Erhöhung (negativer Wert) oder Verringerung (positiver Wert) der Lautheitsempfindung an.

Referenz ist ein herkömmlicher Laminatboden mit einer Melaminharzbeschichtung und einer Plattenstärke von 8 mm.

*Tabelle 1: A-bewerteter Gesamtschalldruckpegel*

| Variante | Referenz (mittleres Spektrum) [dBA (A)] | Probe (mittleres Spektrum) [dBA (A)] | Verbesserungsmaß [dBA (A)] |
|---|---|---|---|
| Beispiel 1 | 75,3 | 64,1 | 11,2 |
| Beispiel 2 | 75,3 | 64,8 | 10,5 |
| Beispiel 3 | 75,3 | 65,9 | 9,4 |
| Beispiel 4 | 75,3 | 63,9 | 11,4 |
| Beispiel 5 | 75,3 | 64,5 | 10,8 |
| LVT (PVC) Boden (5 mm Stärke) | 75,3 | 64,9 | 10,4 |

*Tabelle 2: Lautheit*

| Variante | Referenz (mittleres Spektrum) [Sone] | Probe (mittleres Spektrum) [Sone] | Verbesserungsmaß [%] |
|---|---|---|---|
| Beispiel 1 | 26,0 | 15,1 | 41,9 |
| Beispiel 2 | 26,0 | 15,2 | 41,5 |
| Beispiel 3 | 26,0 | 16,8 | 35,4 |
| Beispiel 4 | 26,0 | 14,9 | 42,7 |
| Beispiel 5 | 26,0 | 16,1 | 38,1 |
| LVT (PVC) Boden (5 mm Stärke) | 26,0 | 10,4 | 40,0 |

Die Beispiele zeigen, dass mit der erfindungsgemäßen Beschichtung signifikante Geräuschminderungen beim Begehen erreicht werden können. Eine Reduzierung um 10 dB wird vom menschlichen Gehör als Halbierung der Lautstärke wahrgenommen. Um eine direkte Vergleichbarkeit zu haben, wurden als Trägerplatten bei Beispielen 1 - 5 nur HDF-Trägerplatten eingesetzt. Mit alternativen Trägerplatten sind weitere deutliche Geräuschreduzierungen möglich.

**4. Beschreibung von bevorzugten Ausführungsformen**

Im Folgenden wird die vorliegende Erfindung unter Bezugnahme auf die beigefügten Figuren genauer erläutert. Hierbei zeigen:

Fig. 1a und b beispielhafte Schichtaufbauten in einer schematischen Darstellung; und

Fig. 2 eine beispielhafte Anlage zur Herstellung des erfindungsgemäßen Paneels in schematischer Ansicht.

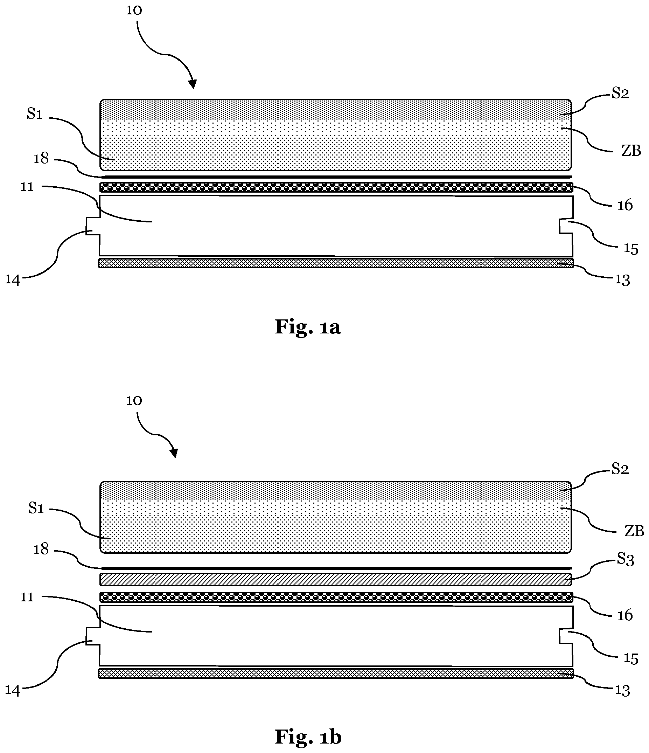

In Fig. 1a ist ein schematischer Schichtaufbau für ein Paneel 10 gemäß der Erfindung gezeigt. Die Darstellung ist rein schematisch und nicht maßstabsgetreu. Insbesondere ist die Trägerplatte 11 erheblich dicker als die weiteren Schichten 12 - 18, die im Bereich von einigen hundert μm liegen. Außerdem sind die einzelnen Schichten zur Vereinfachung des Verständnisses teilweise in einer Explosionsansicht gezeigt und sind im realen Fall alle direkt aneinander angrenzend bzw. direkt aufeinander angeordnet.

Im gezeigten Beispiel ist eine Trägerplatte 11 mit einer Dicke von ca. 8 mm aus HDF-Material gezeigt. An der Rückseite der Trägerplatte 11 ist eine Feuchtigkeitsbarriere 13 in Form einer geeigneten Kunststofffolie aufgeklebt. Diese Feuchtigkeitsbarriere ist optional und abhängig vom Material für die Trägerplatte 11 und dem gewünschten Einsatzgebiet. Die Trägerplatte 11 weist zudem Kopplungsmittel in Form von Nut- 15 und Federelementen 14 auf, die in der Fig. 1a (und b) jedoch nur schematisch angedeutet sind. Geeignete Kopplungsmittel in Form von Nut- und Federelementen, die ein Verbinden mehrerer gleichartiger Paneele in Richtungen parallel zur Vorderseite als auch senkrecht zur Vorderseite durch Formschluss erlauben sind dem Fachmann geläufig. Üblicherweise sind an den vier Seiten einer recht- oder viereckigen Trägerplatte hierfür jeweils gegenüberliegend komplementäre Verbindungsmittel vorgesehen. Details zu derartigen Verbindungsmitteln bzw. Verriegelungsprofilen sind dem Fachmann aus der Technologie der Laminatbodenherstellung bekannt, wie z. B. aus der WO 0188306 oder der WO 0148332 desselben Anmelders, die hiermit durch in Bezugnahme vollständig aufgenommen werden.

Im gezeigten Schichtsystem des Paneels 10 ist eine Grundierungsschicht 16 mit einer Dicke von beispielsweise 50 - 200 $\mu$m vorgesehen, die auf einem wässrigen Acrylatsystem basiert. Unterhalb der Grundierung können weitere sehr dünne Primerschichten und/ oder auch Spachtelschichten aufgebracht werden, wie sie dem Fachmann aus dem Gebiet der direkt bedruckten Paneele bekannt sind. Auf der Grundierung 16 ist eine Dekorschicht bzw. ein Dekor 18 aufgedruckt. Das Dekor 18 bzw. die Dekorschicht 18 wurden beispielsweise mittels einer polymerisierbaren Druckfarbe im digitalen Vierfarbdruck aufgebracht. Über der Dekorschicht 18 befindet sich eine erste elastische Schicht S1 mit einer Dicke von 200 $\mu$m und einer Martenshärte $M_{S1}$ von 15 N/mm$^2$. Auf diese erste elastische Schicht S1 ist eine zweite Schicht S2 aufgetragen, die eine Dicke von 80 $\mu$m und eine Martenshärte von ca. 25 N/mm$^2$ hat. Zwischen den beiden Schichten S1 und S2 ist ein Zwischenbereich ZB vorhanden, der dadurch entstanden ist, dass die Zwischenlage und die Schicht S2 nass-in-nass aufgetragen wurden, so dass es an der Grenzfläche der beiden Lagen bzw. Schichten zu einer teilweisen Vermischung der flüssigen Ausgangsmaterialen kommt. In den Figuren ist dies durch unterschiedlich dichte Punkte schematisch visualisiert.

Das Beispiel der Fig. 1b entspricht dem Beispiel der Fig. 1a mit dem Unterscheid, dass hier zwischen der Grundierungsschicht 16 und der Dekorschicht 18 eine weitere elastische Schicht S3 vorgesehen ist. Die Schicht S3 hat dabei vorzugsweise eine Martenshärte $M_{S3}$ die geringer ist als die Martenshärte der Schicht S1, also $M_{S3} \leq M_{S1}$. Beim Beispiel der Fig. 1b kann die erste Schicht S1 etwas dünner ausgebildet sein, als im Beispiel der Fig. 1a, was in den Figuren durch unterschiedliche Dicken schematisch angedeutet ist.

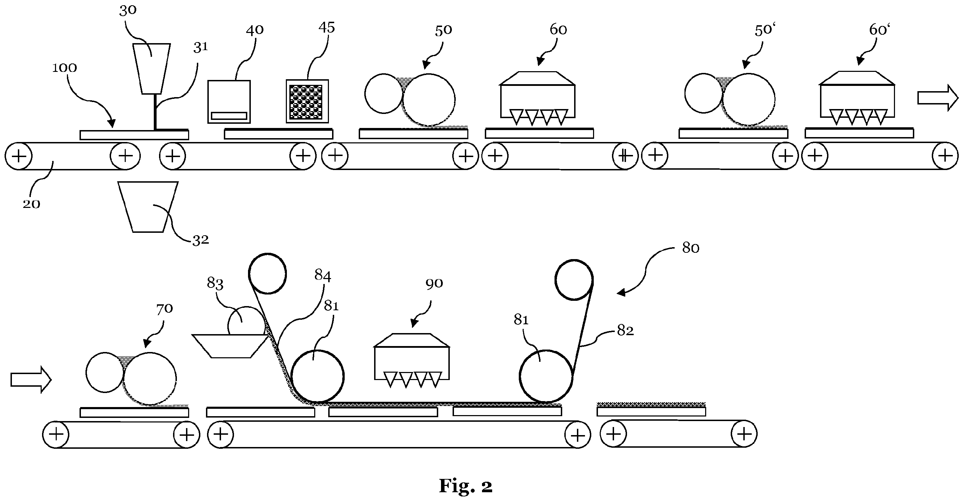

Im Folgenden soll anhand der Fig. 2 beispielhaft die Herstellung eines erfindungsgemäßen Paneels beschrieben werden. Fig. 2 zeigt schematisch eine Beschichtungsanlage zur Beschichtung von Trägerplatten 100. Die Trägerplatten werden nach der Beschichtung in einer separaten Profilierungslinie (nicht gezeigt) zurechtgeschnitten und profiliert. Die Trägerplatten 100 haben beispielsweise eine Dicke zwischen 3 und 20 mm, eine Länge (in Transportrichtung der Anlage aus Fig. 2 gesehen) von 150 - 200 cm und eine Breite von 125 - 210 cm. Es können jedoch auch beliebig andere Plattenmaße für die Trägerplatten verwendet werden, die am Ende des Prozesses in die gewünschte Form und Größe geschnitten werden. Die in der Fig. 2 dargestellten Stationen der Anlage sind nicht abschließend zu verstehen, sondern dienen nur beispielhaft der Erläuterung des erfindungsgemäßen Verfahrens. Vor, hinter und zwischen den gezeigten Stationen können weitere Bearbeitungsstationen vorgesehen sein, wie beispielsweise weitere Trocknungsstationen, Stationen zur Aufbringung von Primern, Stationen zur Aufbringung von Spachtelmasse, Kontroll- und Überwachungsvorrichtungen, etc. Die Trägerplatten 100 werden z. B. über Rollenförderanlagen 20 durch die Beschichtungsanlage transportiert.

In der ersten dargestellten Station 30 wird eine Grundierungsmasse mittels eines flüssigen Vorhangs 31 von Beschichtungsmaterial auf die Vorderseite (Hauptseite) der Trägerplatten 100 aufgetragen. Der flüssige Vorhang 31 erstreckt sich über die komplette Plattenbreite und die Platten werden durch diesen Vorhang hindurch transportiert und dabei beschichtet. Unterhalb der Vorrichtung 30 zur Ausgabe des Vorhangs befindet sich ein Auffangbehälter 32, in den der flüssige Vorhang fällt, wenn keine Platte durch den Vorhang hindurch geführt wird, wie beispielsweise bei der Lücke zwischen zwei aufeinanderfolgenden Platten. Als Beschichtungsmaterial für die Grundierung wird vorzugsweise eine wässrige Acrylatdispersion verwendet. In einer darauffolgenden Trocknungsstation 40 wird die aufgetragene Grundierung mit Heißluft getrocknet, d. h. der wässrigen Acrylatdispersion wird das Wasser entzogen. Nach Trocknung der Grundierung wird mittels einer Digitaldruckanlage 45 eine Dekorschicht auf die Grundierung aufgedruckt. Diese Dekorschicht kann beispielsweise ein Echtholz imitieren, jedoch sind die heutzutage kommerziell erhältlichen Digitaldruckanlagen in der Lage praktisch jedes gewünschte Dekor oder Muster auf die Platten zu drucken. Vorzugsweise kommt in der Druckanlage 45 eine Druckfarbe zum Einsatz, die mittels Strahlung polymerisierbar ist, d. h. eine Druckfarbe, die auf einem polymerisierbaren Acrylat basiert und/oder N-Vinylcaprolactam. Dem Fachmann ist es klar, dass die Darstellung der Digitaldruckanlage 45 nur rein schematisch ist und dass derartige Druckanlagen in der Regel aus mehreren Stationen bestehen. Nach dem Aufdruck des gewünschten Dekors wird in einer ersten Beschichtungsanlage 50 eine erste Lage aus flüssigem strahlenhärtbarem aliphatischem Acrylat aufgetragen. Das Material ist so gewählt, dass es nach der Aushärtung eine Martenshärte MS1 von 0,5 - 120 N/mm$^2$ aufweist. Die Anlage 50 ist eine Walzenauftragsanlage und ist in der Lage eine Schichtdicke von ca. 40 - 100 $\mu$m in einem Arbeitsgang aufzubringen. In der darauffolgenden Station 60 wird die aufgetragene Lage von flüssigem strahlenhärtbarem aliphatischem Acrylat mittels UV-Strahlung zumindest teilweise ausgehärtet. Daran anschließend folgt eine zweite Anlage 50' zum Auftragen einer zweiten Lage aus demselben flüssigen, strahlenhärtbaren Acrylat, wie das der ersten Lage. Auch hier ist die Station 50' eine Walzenauftragsstation, die üblicherweise Schichtdicken von 30 - 100 $\mu$m aufzutragen in der Lage ist.

In Station 60' wird diese zweite Lage durch UV-Strahlung zumindest teilweise ausgehärtet. Die beiden ausgehärteten Lagen bilden die Schicht S1.

Daran anschließend wird in einer dritten Beschichtungsanlage 70 eine Zwischenlage aus demselben flüssigen, strahlenhärtbaren Acrylat aufgetragen wie in den Stationen 50 und 60. Diese Zwischenlage wird jedoch nicht gehärtet, sondern nass einem Folienkalander 80 zugeführt. Dem Fachmann ist klar, dass der Folienkalander 80 in Fig. 2 nur schematisch skizziert ist, um die einzelnen Verfahrensschritte zu verbildlichen. Im Folienkalander 80 wird eine Strukturfolie 82 um Walzen 81 herum geführt. Die Trägerplatten 100 werden unter der Folie 82 hindurch geführt, so dass die Folie 82 auf der Oberseite der Platten 100 zum liegen kommt. Falls gewünscht kann die Folie 82 auch zusätzlich über Andruckwalzen gegen die Oberseiten der Platten 100 gepresst werden. Eine Beschichtungsstation 83 führt der Folie 82 ein Beschichtungsmaterial 84 zu, dass auf die Oberseite der Platten 100 aufgetragen werden soll, bzw. nass auf die noch nasse oder feuchte bei Station 70 aufgebrachte Zwischenlage, so dass es an der Grenzfläche zu einer teilweisen Vermischung der beiden Lagen kommt. Durch diese Vermischung weist das spätere Produkt einen Zwischenbereich auf, in deren Verlauf die Härte $M_{ZB}$ nicht konstant ist, sondern von der Schicht S1 zur Schicht S2 hin zunimmt. In Station 90 werden beide Lagen mittels UV Strahlung möglichst vollständig ausgehärtet. Die Folie 82 ist zu diesem Zweck UV-durchlässig, so dass - wie in Fig. 2 schematisch dargestellt - die Aushärtung der Lagen stattfindet, während die Folie noch darauf angeordnet ist. Da die Folie vorzugsweise eine dreidimensionale Struktur aufweist, wird das Negativbild dieser Struktur in den ausgehärteten Lagen bzw. der gehärteten Schicht S2 eingeprägt und fixiert. So ist es beispielsweise möglich den fertigen Paneelen eine dreidimensionale Holzstruktur zu geben, um eine realistische Imitation einer Echtholzoberfläche zu erreichen. Am Ausgang der Folienkalanders 80 wird die Folie 82 von der Oberfläche der Platten entfernt und das Beschichtungsmaterial 84 bleibt als gehärtete Schicht S2 auf den Platten.

### Patentansprüche

1. Paneel (10), insbesondere Wand-, Decken,- oder Fußbodenpaneel, umfassend eine Trägerplatte (11) mit einer Vorderseite und einer Rückseite, wobei die Trägerplatte (11) zumindest an der Vorderseite ein Schichtsystem aufweist, welches von der Vorderseite ausgehend eine erste elastische Schicht S1 aus einem Polymer und eine zweite Schicht S2 aus einem Polymer aufweist, **dadurch gekennzeichnet, dass** die erste elastische Schicht S1 eine Dicke von 40 bis 600 $\mu$m hat und eine Martenshärte $M_{S1}$ von 0,5 bis 120 N/mm$^2$, wobei die Härte der elastischen Schicht S1 über die gesamte Dicke konstant ist und die Härtedifferenzen innerhalb der Schicht über die gesamte Dicke geringer als 20 N/mm$^2$ sind; und

   die zweite Schicht S2 eine Dicke von 10 bis 180 $\mu$m hat und eine Martenshärte $M_{S2}$, wobei $M_{S2} > M_{S1}$ ist; und zwischen den beiden Schichten S1 und S2 ein Zwischenbereich ZB existiert, mit einer Martenshärte $M_{ZB}$, wobei $M_{S2} > M_{ZB} \geq M_{S1}$ ist, wobei die Martenshärten wie in der Beschreibung offenbart nach DIN EN ISO 14577 bestimmt werden.

2. Paneel nach Anspruch 1, **dadurch gekennzeichnet, dass** das Polymer der Schicht S1 ein aliphatisches Polymer ist.

3. Paneel nach einem der vorhergehenden Ansprüche 1 oder 2, **dadurch gekennzeichnet, dass** $M_{S1}$ zwischen 2 und 50 N/mm$^2$ liegt, noch mehr bevorzugt zwischen 2 und 40 N/mm$^2$, und am meisten bevorzugt zwischen 2 und 30 N/mm$^2$.

4. Paneel nach einem der vorhergehenden Ansprüche, **dadurch gekennzeichnet, dass** $M_{S2}$ zwischen 5 und 300 N/mm$^2$ liegt, bevorzugt 15 und 150 N/mm$^2$, noch mehr bevorzugt zwischen 20 und 100 N/mm$^2$ und am meisten bevorzugt zwischen 25 und 90 N/mm$^2$.

5. Paneel nach einem der vorhergehenden Ansprüche, **dadurch gekennzeichnet, dass** die erste elastische Schicht S1 eine Dicke von 40 bis 500 $\mu$m hat, bevorzugt von 80 bis 450 $\mu$m und am meisten bevorzugt von 120 bis 240 $\mu$m.

6. Paneel nach einem der vorhergehenden Ansprüche, **dadurch gekennzeichnet, dass** die zweite Schicht S2 eine Dicke von 10 bis 180 $\mu$m hat, bevorzugt von 20 bis 100 $\mu$m und am meisten bevorzugt von 30 bis 80 $\mu$m.

7. Paneel nach einem der vorhergehenden Ansprüche, **dadurch gekennzeichnet, dass** die Trägerplatte (11) an ihren Seiten über Kopplungsmittel in Form von Nut- und Federelementen verfügt, die ein Verbinden mehrerer gleichartiger Paneele in Richtungen parallel zur Vorderseite als auch senkrecht zur Vorderseite durch Formschluss erlauben.

8. Paneel nach einem der vorhergehenden Ansprüche, **dadurch gekennzeichnet, dass** das Polymer der Schicht S1 auf einem strahlenhärtbaren aliphatischen Acrylat basiert, insbesondere einem aliphatischen Urethanacrylat.

9. Paneel nach einem der vorhergehenden Ansprüche, **dadurch gekennzeichnet, dass** zwischen der Vorderseite und der Schicht S1 weiter eine Dekorschicht (18) umfassend eine Druckfarbe vorgesehen ist.

10. Paneel nach Anspruch 9, **dadurch gekennzeichnet, dass** zwischen der Vorderseite und der Dekorschicht eine dritte elastische Schicht S3 vorgesehen ist, die eine Martenshärte $M_{S3}$ hat, mit $M_{S3} \leq M_{S1}$.

11. Paneel nach dem vorhergehenden Anspruch, **dadurch gekennzeichnet, dass** die Schicht S3 eine Dicke von 10 bis 300 $\mu$m hat, vorzugsweise von 30 bis 150 $\mu$m und am meisten bevorzugt von 60 bis 120 $\mu$m.

12. Paneel nach einem der vorhergehenden Ansprüche, **dadurch gekennzeichnet, dass** die Druckfarbe auf einem polymerisierbaren Acrylat basiert und/oder N-Vinylcaprolactam.

13. Paneel nach einem der vorhergehenden Ansprüche, **dadurch gekennzeichnet, dass** die Druckfarbe der Dekorschicht (18) und zumindest ein Teil der Schicht S1 gemeinsam gehärtet wurden, vorzugsweise durch Strahlung.

14. Paneel nach einem der vorhergehenden Ansprüche, **dadurch gekennzeichnet, dass** das Schichtsystem eine Dämpfungswirkung von zumindest 5 dB, vorzugweise zumindest 8 dB und am meisten bevorzugt zumindest 9 dB hat verglichen mit der unbeschichteten Trägerplatte, gemessen nach EPLF-Norm.

15. Paneel nach einem der vorhergehenden Ansprüche, **dadurch gekennzeichnet, dass** die Härtedifferenzen innerhalb der Schicht S1 geringer als 15 N/mm$^2$ sind und noch mehr bevorzugt geringer als 10 N/mm$^2$ sind.

**Claims**

1. Panel (10), in particular wall, ceiling or floor panel, comprising a carrier plate (11) having a front side and a rear side, wherein the carrier plate (11) has, at least on the front side, a layer system which, starting from the front side, has a first elastic layer S1 composed of a polymer and a second layer S2 composed of a polymer, **characterized in that** the first elastic layer S1 has a thickness of 40 to 600 $\mu$m and a Martens hardness $M_{S1}$ of 0.5 to 120 N/mm$^2$, wherein the hardness of the elastic layer S1 is constant over the entire thickness and the differences in hardness within the layer are less than 20 N/mm$^2$ over the entire thickness; and

   the second layer S2 has a thickness of 10 to 180 $\mu$m and a Martens hardness $M_{S2}$, wherein $M_{S2} > M_{S1}$; and an intermediate region ZB exists between the two layers S1 and S2, with a Martens hardness $M_{ZB}$, wherein $M_{S2} > M_{ZB} \geq M_{S1}$, wherein the Martens hardnesses are determined according to DIN EN ISO 14577 as disclosed in the description.

2. Panel according to claim 1, **characterized in that** the polymer of the layer S1 is an aliphatic polymer.

3. Panel according to one of the preceding claims 1 or 2, **characterized in that** $M_{S1}$ is between 2 and 50 N/mm$^2$, even more preferably between 2 and 40 N/mm$^2$, and most preferably between 2 and 30 N/mm$^2$.

4. Panel according to one of the preceding claims, **characterized in that** $M_{S2}$ is between 5 and 300 N/mm$^2$, preferably 15 and 150 N/mm$^2$, even more preferably between 20 and 100 N/mm$^2$ and most preferably between 25 and 90 N/mm$^2$.

5. Panel according to one of the preceding claims, **characterized in that** the first elastic layer S1 has a thickness of 40 to 500 $\mu$m, preferably of 80 to 450 $\mu$m and most preferably of 120 to 240 $\mu$m.

6. Panel according to one of the preceding claims, **characterized in that** the second layer S2 has a thickness of 10 to 180 $\mu$m, preferably of 20 to 100 $\mu$m and most preferably of 30 to 80 $\mu$m.

7. Panel according to one of the preceding claims, **characterized in that** the carrier plate (11) has, on its sides, coupling means in the form of tongue and groove elements which allow a plurality of similar panels to be connected in directions parallel to the front side and also perpendicular to the front side by positive locking.

8. Panel according to one of the preceding claims, **characterized in that** the polymer of the layer S1 is based on a radiation-curable aliphatic acrylate, in particular an aliphatic urethane acrylate.

9. Panel according to one of the preceding claims, **characterized in that** between the front side and the layer S1 there is further provided a decorative layer (18) comprising a printing ink.

10. Panel according to claim 9, **characterized in that** between the front side and the decorative layer there is provided a third elastic layer S3 which has a Martens hardness $M_{S3}$, with $M_{S3} \leq M_{S1}$.

11. Panel according to the preceding claim, **characterized in that** the layer S3 has a thickness of 10 to 300 $\mu$m, preferably of 30 to 150 $\mu$m and most preferably of 60 to 120 $\mu$m.

12. Panel according to one of the preceding claims, **characterized in that** the printing ink is based on a polymerizable acrylate and/or N-vinylcaprolactam.

13. Panel according to one of the preceding claims, **characterized in that** the printing ink of the decorative layer (18) and at least part of the layer S1 have been cured together, preferably by radiation.

14. Panel according to one of the preceding claims, **characterized in that** the layer system has a damping effect of at least 5 db, preferably at least 8 db and most preferably at least 9 db compared with the uncoated carrier plate, measured according to the EPLF standard.

15. Panel according to one of the preceding claims, **characterized in that** the differences in hardness within the layer S1 are less than 15 N/mm$^2$ and even more preferably less than 10 N/mm$^2$.


**Revendications**

1. Panneau (10), en particulier panneau mural, pour plafond ou plancher, comprenant une plaque support (11) ayant une face avant et une face arrière, la plaque support comportant au moins sur la face avant un système de couches, qui en partant de la face avant comprend une première couche élastique S1 en un polymère et une deuxième couche S2 en un polymère, **caractérisé en ce que**

   la première couche élastique S1 a une épaisseur de 40 à 600 $\mu$m et une dureté Martens $M_{S1}$ de 0,5 à 120 N/mm$^2$, la dureté de la couche élastique S1 étant constante sur toute son épaisseur, et les différences de dureté à l'intérieur de la couche étant sur toute son épaisseur inférieures à 20 N/mm$^2$ ; et
   la deuxième couche S2 a une épaisseur de 10 à 180 $\mu$m et une dureté Martens $M_{S2}$, avec $M_{S2} > M_{S1}$ ;
   et il existe entre les deux couches S1 et S2 une couche intermédiaire ZB ayant une dureté Martens $M_{ZB}$, avec $M_{S2} > M_{ZB} \geq M_{S1}$, , les duretés Martens étant déterminées selon DIN EN ISO 14577 comme exposé dans la description.

2. Panneau selon la revendication 1, **caractérisé en ce que** le polymère de la couche S1 est un polymère aliphatique.

3. Panneau selon l'une des revendications précédentes 1 ou 2, **caractérisé en ce que** $M_{S1}$ est compris entre 2 et 50 N/mm$^2$, plus préférentiellement entre 2 et 40 N/mm$^2$ et tout spécialement entre 2 et 30 N/mm$^2$.

4. Panneau selon l'une des revendications précédentes, **caractérisé en ce que** $M_{S2}$ est compris entre 5 et 300 N/mm$^2$, de préférence entre 15 et 150 N/mm$^2$, plus préférentiellement entre 20 et 100 N/mm$^2$ et tout spécialement entre 25 et 90 N/mm$^2$.

5. Panneau selon l'une des revendications précédentes, **caractérisé en ce que** la première couche élastique S1 a une épaisseur de 40 à 500 $\mu$m, de préférence de 80 à 450 $\mu$m et tout spécialement de 120 à 240 $\mu$m.

6. Panneau selon l'une des revendications précédentes, **caractérisé en ce que** la deuxième couche S2 a une épaisseur de 10 à 180 $\mu$m, de préférence de 20 à 100 $\mu$m et tout spécialement de 30 à 80 $\mu$m.

7. Panneau selon l'une des revendications précédentes, **caractérisé en ce que** la plaque support (11) dispose, sur ses faces, de moyens de couplage sous forme d'éléments à rainure et languette, qui permettent une liaison de plusieurs panneaux équivalents dans des directions parallèles à la face avant, tout comme perpendiculairement à la face avant, par une liaison avec correspondance de forme.

8. Panneau selon l'une des revendications précédentes, **caractérisé en ce que** le polymère de la couche S1 est à base d'un acrylate aliphatique durcissable par rayonnement, en particulier d'un acrylate d'uréthane aliphatique.

9. Panneau selon l'une des revendications précédentes, **caractérisé en ce qu'**une couche décorative (18) comportant une encre d'impression est prévue entre la face avant et la couche S1.

10. Panneau selon la revendication 9, **caractérisé en ce qu'**une troisième couche élastique S3, qui a une dureté Martens $M_{S3}$ avec $M_{S3} \leq M_{S1}$, est prévue entre la face avant et la couche décorative.

11. Panneau selon la revendication précédente, **caractérisé en ce que** la couche S3 a une épaisseur de 10 à 300 $\mu$m, de préférence de 30 à 150 $\mu$m et tout spécialement de 60 à 120 $\mu$m.

12. Panneau selon l'une des revendications précédentes, **caractérisé en ce que** l'encre d'impression est à base d'un acrylate polymérisable et/ou de N-vinylcaprolactame.

13. Panneau selon l'une des revendications précédentes, **caractérisé en ce que** l'encre d'impression de la couche décorative (18) et au moins une partie de la couche S1 sont durcies simultanément, de préférence par rayonnement.

14. Panneau selon l'une des revendications précédentes, **caractérisé en ce que** le système de couches a un effet d'amortissement d'au moins 5 dB, de préférence d'au moins 8 dB et tout spécialement d'au moins 9 dB, par comparaison avec la plaque support non revêtue, mesuré selon la norme EPLF.

15. Panneau selon l'une des revendications précédentes, **caractérisé en ce que** les différences de dureté à l'intérieur de la couche S1 sont inférieures à 15 N/mm$^2$ et plus préférentiellement inférieures à 10 N/mm$^2$.

**Fig. 1a**

**Fig. 1b**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006058655 A1
- DE 102006029963 A1
- WO 2007042258 A
- WO 2008061791 A
- WO 2007059805 A
- WO 2007059967 A
- WO 2008061765 A
- WO 0188306 A
- WO 0148332 A